# EUROPÄISCHE PATENTSCHRIFT

(11) **EP 4 008 035 B1**
(45) Veröffentlichungstag und Bekanntmachung des Hinweises auf die Patenterteilung: **21.06.2023**
(21) Anmeldenummer: 20723083.0
(22) Anmeldetag: 28.04.2020
(51) Int. Cl.: H01M 8/04119, H01M 8/04492, H01M 8/04701, H01M 8/04828

(54) **BEFEUCHTER, BRENNSTOFFZELLENVORRICHTUNG MIT BEFEUCHTER SOWIE KRAFTFAHRZEUG**
HUMIDIFIER, FUEL CELL DEVICE COMPRISING A HUMIDIFIER, AND MOTOR VEHICLE
HUMIDIFICATEUR, DISPOSITIF DE PILE À COMBUSTIBLE COMPRENANT UN HUMIDIFICATEUR ET VÉHICULE À MOTEUR

(30) Priorität: 01.08.2019 DE 102019211589
(43) Veröffentlichungstag der Anmeldung: 08.06.2022
(73) Patentinhaber: Audi AG, 85045 Ingolstadt (DE); VOLKSWAGEN AG, 38440 Wolfsburg (DE)
(72) Erfinder: STAECK, Rune, 38518 Gifhorn (DE); WESTPHAL, Tore, 38527 Meine (DE)
(74) Vertreter: Hentrich Patent- & Rechtsanwaltspartnerschaft mbB
(86) Internationale Anmeldenummer: PCT/EP2020/061805
(87) Internationale Veröffentlichungsnummer: WO 2021/018427

(56) Entgegenhaltungen:
- EP-A1- 2 139 061
- DE-A1-102016 200 410
- JP-A- 2004 207 022
- US-A1- 2006 147 773

## Beschreibung

Die Erfindung betrifft einen Befeuchter für eine Brennstoffzellenvorrichtung mit einerwasserdampfpermeablen Membran und zumindest einem auf einer Seite der Membran angeordneten Flussfeld, in dem Strömungskanäle durch Flussfeldstege getrennt sind, wobei die Flussfeldstege als Hohlstege ausgeführt sind zur Einbindung in einen Kühlmittelkreislauf. Die Erfindung betrifft weiterhin eine Brennstoffzellenvorrichtung und ein Kraftfahrzeug.

Befeuchter im Allgemeinen werden eingesetzt, um bei zwei gasförmigen Medien mit einem unterschiedlichen Feuchtegehalt eine Übertragung der Feuchte auf das trockenere Medium bewirken zu können. Derartige Gas/GasBefeuchter finden insbesondere Anwendung in Brennstoffzellenvorrichtungen, bei denen im Kathodenkreislauf zur Versorgung der Kathodenräume des Brennstoffzellenstapels Luft mit dem darin enthaltenen Sauerstoff verdichtet wird, so dass relativ warme und trockene komprimierte Luft vorliegt, deren Feuchte für die Verwendung in den Brennstoffzellenstapeln für die Membranelektrodeneinheit nicht ausreicht. Die durch den Verdichter bereitgestellte trockene Luft für den Brennstoffzellenstapel wird befeuchtet, indem sie an einer für Wasserdampf durchlässigen Membran vorbeigeführt wird, deren andere Seite mit der feuchten Abluft aus dem Brennstoffzellenstapel bestrichen wird. Für die Konditionierung der den Kathodenräumen des Brennstoffzellenstapels zuzuführenden Luft ist auch deren Temperierung erforderlich, wozu in der Regel nach dem Verdichter positionierte Ladeluftkühler eingesetzt werden. Der Befeuchter und der Ladeluftkühler sind große Komponenten, die zu einer starken Vergrößerung des erforderlichen Bauraums für eine Brennstoffzellenvorrichtung beitragen und die Effizienz der Brennstoffzellenvorrichtung einschränken, weil hohe thermische Verluste vorliegen.

In der DE 10 2013 004 799 A1 ist ein Befeuchter mit den Merkmalen des Oberbegriffs vom Patentanspruch 1 beschrieben, bei dem bei einer wasserdampfpermeablen Membran auf einer ersten Seite eine erste Schichtanordnung zu finden ist, die eine Vielzahl parallel zur Membran verlaufender Strömungsstege umfasst, während auf einer zweiten Seite der Membran eine zweite Schichtanordnung vorliegt, die auch eine Vielzahl parallel zur Membran verlaufender Strömungsstege umfasst, welche Strömungskanäle begrenzen. Zumindest ein Teil der Strömungsstege der zweiten Strömungsschicht sind mit einer Mehrzahl von Stabilisierungsstellen in Form lokaler Vergrößerungen der Stegbreite ausgebildet.

In der US 2008/0075993 A1 wird eine Bipolarplatte mit Poren beschrieben, die durch Membranen bedeckt sind und es selektiv erlauben, durch die Membran treten und ein Reaktionsgas zu befeuchten.

In der DE 10 2015 122 144 A1 ist ein Befeuchter mit integriertem Wasserabscheider bereitgestellt, wobei eine Vielzahl von separaten Abscheideelementen auf der ersten Seite der Membran angeordnet ist.

In der JP 2004 207 022 A wird eine Befeuchtungsvorrichtung mit einer wasserdampfdurchlässigen Membran beschrieben, die eine Abgasleitung und eine Zuluftleitung enthält, wobei die Abgasleitung auf einer Oberfläche der wasserdampfdurchlässigen Membran angeordnet ist und die Zuluftleitung auf einer anderen Oberfläche der wasserdampfdurchlässigen Membran angeordnet ist. Innerhalb des Befeuchters sind mehrere Einheiten gebildet, die eine oder mehrere Einzeleinheiten laminieren oder stapeln und durch die Strömungswege gebildet sind.

Auch in der DE 10 2016 200 410 A1 ist eine Strömungsplatte für einen Befeuchter eines Brennstoffzellensystems offenbart. Zwischen den in der Strömungsplatte befindlichen Gaskanälen ist ein Kühlkanal angeordnet, der die Wärmemenge des Frischgasstromes an das im Kühlkanal befindliche Kühlmedium abführt.

Die US 2006 / 0147773 offenbart einen Luftbefeuchter, der Produktwasser und/oder Kühlflüssigkeit aus dem Kühlflüssigkeitssystem der elektrochemischen Zelle verwendet, um die Feuchtigkeit und Temperatur der Reaktantengase am Eingang einzustellen, wobei der Befeuchter eine wasserdurchlässige Membran beinhaltet. Der warme Kühlflüssigkeitsstrom vom Reaktionsgas-Zufuhrstrom wird durch Separatoren, die vorzugsweise aus Metall bestehen, getrennt um die Wärmeübertragungsrate zu maximieren.

In der EP 2 139 061 A1 wird eine Membranbefeuchterzelle zur Befeuchtung eines Gasstroms beschrieben, wobei eine wasserdurchlässige Membran und einer an der Membran anliegenden oder ihr gegenüberliegenden Stützlage aus faserigem Kohlepapier eingesetzt sind.

Aufgabe der vorliegenden Erfindung ist es, einen Befeuchter mit verbesserter Effizienz sowie eine verbesserte Brennstoffzellenvorrichtung und ein verbessertes Kraftfahrzeug zu schaffen.

Diese Aufgabe wird durch einen Befeuchter mit den Merkmalen des Anspruchs 1, durch eine Brennstoffzellenvorrichtung mit den Merkmalen des Anspruchs 6 und durch ein Kraftfahrzeug mit den Merkmalen des Anspruchs 7 gelöst. Vorteilhafte Ausgestaltungen mit zweckmäßigen Weiterbildungen der Erfindung sind in den abhängigen Ansprüchen angegeben.

Der erfindungsgemäße Befeuchter zeichnet sich dadurch aus, dass die Flussfeldstege als Hohlstege ausgeführt sind zur Einbindung in einen Kühlmittelkreislauf, also die Möglichkeit eröffnet ist, dem Flussfeld beziehungsweise dem in den Strömungskanälen strömenden Medium Wärme zuführen zu können, um zu einen das Verdampfen von Flüssigwasser zu fördern und zu anderen dem Temperaturabfall bei dem Verdampfen des Flüssigwassers entgegen zu wirken

Um eine große Oberfläche für die Wärmeübertragung bereit zu stellen, ist vorgesehen, dass die Hohlstege im Querschnitt als Polygon gestaltet sind. Der Förderung der Wärmeübertragung dient auch, dass die Flussfeldstege aus einem wärmeleitenden Material gebildet sind.

Weitere Vorteile ergeben sich, indem die Flussfeldstege auf ihrer Außenseite einen Wasserspeicher aufweisen, da so diskontinuierlich anfallendes Flüssigwasser gespeichert werden kann zur Abgabe, wenn Betriebszustände ohne Einbringung von Flüssigwasser vorliegen.

Es hat sich als zweckmäßig erwiesen, wenn der Wasserspeicher durch ein hygroskopisches Material gebildet ist. Ergänzend oder auch alternativ besteht auch die Möglichkeit, dass die Flussfeldstege eine poröse Struktur aufweisen. In den Poren kann gleichfalls Wasser gespeichert werden.

Der besseren Temperierung des in den Strömungskanälen durchgeleiteten Mediums dient auch, dass das Flussfeld in einem wärmeisolierenden Rahmen angeordnet ist.

Hinsichtlich der Nutzung von Gleichteilen für eine kostengünstige Fertigung und der Einfachheit des Aufbaus sowie der Effizienz der Befeuchtung ist es vorteilhaft, wenn auf der dem Flussfeld gegenüberliegenden Seite der Membran ein zweites, gleichartig gebildetes Flussfeld zur Durchleitung des zu befeuchtenden Gases angeordnet ist.

Ist der Befeuchter einer Brennstoffzellenvorrichtung zugeordnet, steht bereits ein Kühlkreislauf zur Verfügung, so dass zweckmäßigerwesie ein Kühlkreislauf eines Brennstoffzellenstapels durch die als Hohlstege gebildeten Flussfeldstege des Befeuchters geführt ist,. Des Weiteren besteht auch die Möglichkeit, dass die Strömungskanäle mit einem Wasserabscheider des Brennstoffzellenstapels strömungsverbunden sind, um so über eine Quelle von Flüssigwasser zu verfügen.

Ein Kraftfahrzeug mit einer derartigen Brennstoffzellenvorrichtung weist einen geringeren Bauraumbedarf auf und ist effizienter zu betreiben.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Darstellung einer einen Befeuchter aufweisenden Brennstoffzellenvorrichtung,
- Fig. 2: eine schematische Darstellung eines durch Stege getrennte Kühlmittelkanäle aufweisenden Flussfeldes eines Befeuchters, mit den Stegen zugeordneten, geleert dargestellten Wasserspeichern,
- Fig. 3: einen Querschnitt durch das Flussfeld aus Figur 2,
- Fig. 4: eine der Figur 2 entsprechende Darstellung mit gefüllt dargestellten Wasserspeichern,

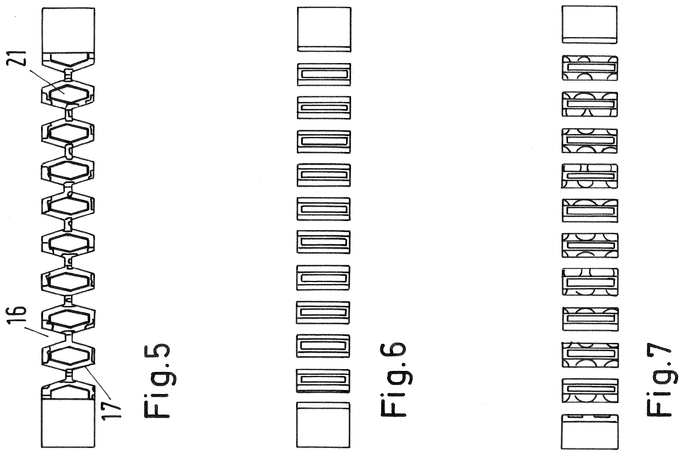

- Fig. 5: eine der Figur 3 entsprechende Darstellung zu dem Flussfeld aus Figur 4,
- Fig. 6: eine der Figur 3 entsprechende Darstellung einer alternativen Ausführungsform mit modifizierten Stegen, und
- Fig. 7: eine der Figur 5 entsprechende Darstellung der alternativen Ausführungsform aus Figur 6.

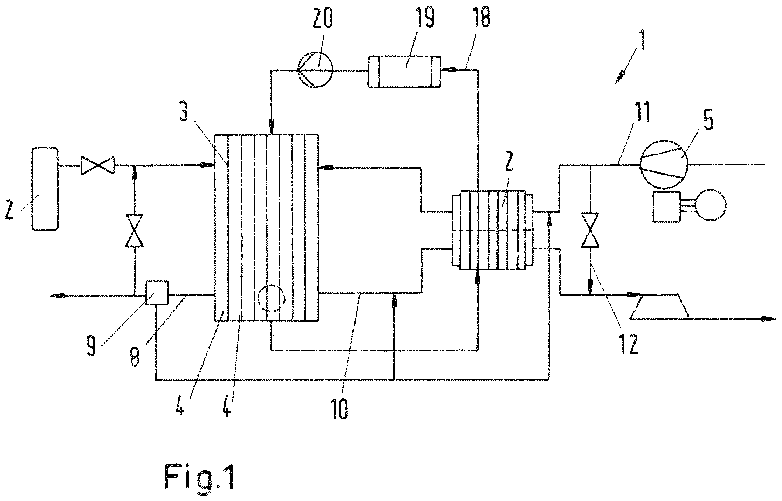

In der Figur 1 ist schematisch eine Brennstoffzellenvorrichtung gezeigt, wobei diese einen Befeuchter zur Feuchteregulierung einer Mehrzahl von in einem Brennstoffzellenstapel 3 zusammengefasster Brennstoffzellen 4 umfasst.

Jede der Brennstoffzellen 4 umfasst eine Anode, eine Kathode sowie eine die Anode von der Kathode trennende, protonenleitfähige Membran. Die Membran ist aus einem lonomer, vorzugsweise einem sulfonierten Polytetrafluorethylen-Polymer (PTFE) oder einem Polymer der perfluorierten Sulfonsäure (PFSA) gebildet. Alternativ kann die Membran auch als eine sulfonierte Hydrocarbon-Membran gebildet sein.

Den Anoden und/oder den Kathoden kann zusätzlich ein Katalysator beigemischt sein, wobei die Membranen vorzugsweise auf ihrer ersten Seite und/oder auf ihrer zweiten Seite mit einer Katalysatorschicht aus einem Edelmetall oder einem Gemisch umfassend Edelmetalle wie Platin, Palladium, Ruthenium oder dergleichen beschichtet sind, die als Reaktionsbeschleuniger bei der Reaktion der jeweiligen Brennstoffzelle dienen.

Über einen Anodenraum kann der Anode Brennstoff (zum Beispiel Wasserstoff) zugeführt werden. In einer Polymerelektrolytmembranbrennstoffzelle (PEM-Brennstoffzelle) werden an der Anode Brennstoff oder Brennstoffmoleküle in Protonen und Elektronen aufgespaltet. Die PEM lässt die Protonen hindurch, ist aber undurchlässig für die Elektronen. An der Anode erfolgt beispielsweise die Reaktion: 2H₂ → 4H⁺ + 4e⁻ (Oxidation/Elektronenabgabe). Während die Protonen durch die PEM zur Kathode hindurchtreten, werden die Elektronen über einen externen Stromkreis an die Kathode oder an einen Energiespeicher geleitet.

Über einen Kathodenraum kann der Kathode das Kathodengas (zum Beispiel Sauerstoff oder Sauerstoff enthaltende Luft) zugeführt werden, so dass kathodenseitig die folgende Reaktion stattfindet: O₂ + 4H⁺ + 4e⁻→ 2H₂O (Reduktion/Elektronenaufnahme).

Da in dem Brennstoffzellenstapel 3 mehrere Brennstoffzellen 4 zusammengefasst sind, muss eine ausreichend große Menge an Kathodengas zur Verfügung gestellt werden, so dass durch einen Verdichter 5 ein großer Kathodengasmassenstrom oder Frischgasstrom bereitgestellt wird, wobei infolge der Komprimierung des Kathodengases sich dessen Temperatur stark erhöht. Die Konditionierung des Kathodengases oder des Frischluftgasstroms, also dessen Einstellung hinsichtlich der im Brennstoffzellenstapel gewünschten Temperatur und Feuchte, erfolgt in einem dem Verdichter 5 nachgelagerten nicht näher gezeigten Ladeluftkühler sowie in dem Befeuchter 2, der eine Feuchtesättigung der Membranen der Brennstoffzellen 4 zur Steigerung von deren Effizienz bewirkt, da dies den Protonentransport begünstigt.

Anodenseitig ist der Brennstoffzellenstapel 3 mit einer Anodenzufuhrleitung 6 fluidmechanisch verbunden, so dass in dem schematisch dargestellten Brennstoffspeicher 7 enthaltener Brennstoff dem Brennstoffzellenstapel 3 zugeführt werden kann. Ein Ventil oder auch eine Saugstrahlpumpe können dabei geeignet sein, um den gewünschten Partialdruck an frischem Brennstoff innerhalb des Anodenkreislaufes zu realisieren, der durch die Anodenrezirkulationsleitung 8 zustande kommt. Mit einer solchen Anodenrezirkulationsleitung 8 kann der im Brennstoffzellenstapel 3 nicht verbrauchte Brennstoff den Anodenräumen stromauf des Brennstoffzellenstapels 3 erneut zugeführt werden, so dass dabei die Anodenrezirkulationsleitung 8 wieder in die Anodenzufuhrleitung 6 mündet. Um die Flüssigkeit aus dem Anodenkreislauf auszutragen, ist vorliegend in die Anodenrezirkulationsleitung 8 ein Abscheider 9 eingebunden. Dieser ist fluidmechanisch mit der Kathodenseite der Brennstoffzellenvorrichtung 1 verbunden, so dass die anodenseitig anfallende Flüssigkeit beispielsweise in die stromab des Brennstoffzellenstapels 3 vorhandene Kathodenabgasleitung 10 eingebracht wird, um die Flüssigkeit beispielsweise aus der Brennstoffzellenvorrichtung 1 auszuleiten. Alternativ oder ergänzend kann die anodenseitig anfallende Flüssigkeit vom Abscheider 9 auch in eine Kathodenzufuhrleitung 11 stromauf des Befeuchters 2 münden, so dass die Flüssigkeit dort in das frische Kathodengas eingetragen wird, bevor es in den Befeuchter 2 gelangt. Damit ist der Vorteil verbunden, dass der Befeuchter 2 insgesamt kleiner ausgelegt werden kann, da das frische, durch das Verdichten mittels des Verdichters 5 trockene Frischgas dann nicht mehr so stark zu befeuchten ist, um im Brennstoffzellenstapel 3 die erforderliche Feuchte der Membranen zu gewährleisten.

Um den Massenstrom des Kathodengases durch den Brennstoffzellenstapel 3 regulieren zu können ist ein Bypass 12 vorhanden, welcher ein Stellglied, insbesondere ein Druckregelventil aufweist. Dieser Bypass 12 verbindet die Kathodenzufuhrleitung 11 mit der Kathodenabgasleitung 10.

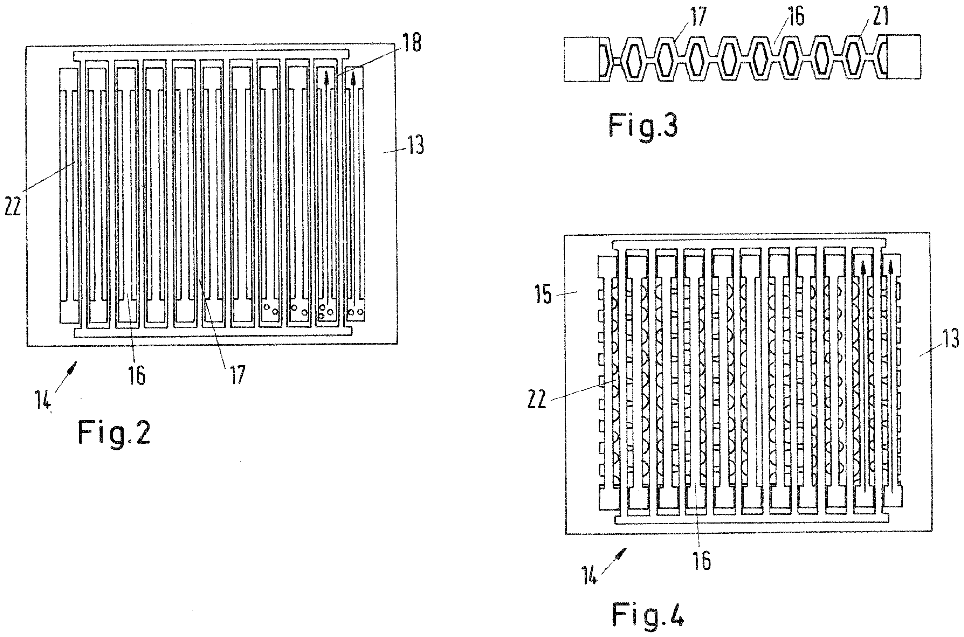

Der Befeuchter 2 ist in dem in Figur 1 gezeigten Ausführungsbeispiel als Planarbefeuchter mit mehreren Befeuchtermodulen 13 aufgebaut, von denen jedes mit einer wasserdampfpermeablen Membran und einem auf einer Seite der Membran angeordneten Flussfeld 14 und einem auf der gegenüberliegenden Seite der Membran angeordneten zweiten Flussfeld 14 gebildet ist, die in einem wärmeisolierenden, also schlecht Wärme leitenden Rahmen 15 angeordnet sind. In den Flussfeldern 14 sind Strömungskanäle 16 durch Flussfeldstege 17 getrennt, wobei die Flussfeldstege 17 als Hohlstege (Figur 3) ausgeführt sind zur Einbindung in einen Kühlmittelkreislauf 18, nämlich in den Kühlmittelkreislauf 18 des Brennstoffzellenstapels 3 der Brennstoffzellenvorrichtung 1, der einen Kühler 19 und eine Kühlmittelpumpe 20 aufweist, die in dem in Figur 1 gezeigten Ausführungsbeispiel stromab des Befeuchters 2 in dem Kühlmittelkreislauf 18 angeordnet sind.

Die mit dem Kühlmittel aus dem Brennstoffzellenstapel 3 abgeführte Wärme wird also genutzt, um das in den Strömungskanälen 16 strömende Gas zu erwärmen und der durch das Verdampfen des Flüssigwassers erfolgenden Abkühlung entgegen zu wirken. Auch ist mit dieser Wärmezufuhr eine höhere Flüssigwasserumsetzung verbunden. Realisiert ist dies, indem die Hohlstege zur Vergrößerung der Oberfläche im Querschnitt als Polygon 21 gestaltet und aus einem wärmeleitenden Material gebildet sind.

Diese Wärmenutzung vor dem Kühler 19 führt auch dazu, dass dieser weniger Wärme dem Kühlmittel entziehen muss und daher gegebenenfalls kleiner ausgeführt werden kann.

Weiterhin wird das im Brennstoffzellenstapel 3 anfallende und im Abscheider 9 gesammelte Flüssigwasser genutzt, indem die Strömungskanäle 16 mit dem Abscheider 9 des Brennstoffzellenstapels 9 strömungsverbunden sind. Auf der Frischgasseite führt dies zu einer Befeuchtung, so das weniger Wasserübertragung durch die Membran erforderlich ist und daher die Membranfläche und infolge dessen die Baugröße des Befeuchters 2 reduziert werden kann. Auf der Kathodenabgasseite führt dies zu der Befeuchtung des Kathodenabgases.

Da die Flussfeldstege 17 auf ihrer Außenseite einen Wasserspeicher 22 aufweisen, besteht die Möglichkeit, diese Wasserspeicher 22 bei Vorliegen von Flüssigwasser zu füllen und das gespeicherte Wasser dann abzugeben, wenn weniger Flüssigwasser aus dem Abscheider 9 zur Verfügung steht. Der Wasserspeicher 22 ist durch ein hygroskopisches Material gebildet ist, das auf den Flussfeldstegen 17 aufgelegt, verklebt oder eingepresst ist. Auch besteht die Möglichkeit, dass die Flussfeldstege 17 eine poröse Struktur aufweisen.

In einem eine Brennstoffzellenvorrichtung 1 mit einem derartigen Befeuchter 2 aufweisenden Kraftfahrzeug besteht weniger Bauraumbedarf für den Befeuchter 2, der kompakter und entsprechend mit weniger Materialaufwand gefertigt werden kann.

### BEZUGSZEICHENLISTE

- 1.: Brennstoffzellenvorrichtung
- 2.: Befeuchter
- 3.: Brennstoffzellenstapel
- 4.: Brennstoffzelle
- 5.: Verdichter
- 6.: Anodenzufuhrleitung
- 7.: Brennstoffspeicher
- 8.: Anodenrezirkulationsleitung
- 9.: Abscheider
- 10.: Kathodenabgasleitung
- 11.: Kathodenzufuhrleitung
- 12.: Bypass
- 13.: Befeuchtermodul
- 14.: Flussfeld
- 15.: Rahmen
- 16.: Strömungskanale
- 17.: Flussfeldstege
- 18.: Kühlmittelkreislauf
- 19.: Kühler
- 20.: Kühlmittelpumpe
- 21.: Polygon
- 22.: Wasserspeicher

## Patentansprüche

1. Befeuchter für eine Brennstoffzellenvorrichtung (1) mit einer wasserdampfpermeablen Membran und zumindest einem auf einer Seite der Membran angeordneten Flussfeld, in dem Strömungskanäle (16) durch Flussfeldstege (17) getrennt sind, wobei die Flussfeldstege (17) als Hohlstege ausgeführt sind zur Einbindung in einen Kühlmittelkreislauf (18) **dadurch gekennzeichnet, dass** die Hohlstege im Querschnitt als Polygon gestaltet sind und auf ihrer Außenseite einen Wasserspeicher (22) aufweisen, wobei der Wasserspeicher (22) durch ein hygroskopisches Material gebildet ist.

2. Befeuchter nach Anspruch 1, **dadurch gekennzeichnet, dass** die Flussfeldstege (17) aus einem wärmeleitenden Material gebildet sind.

3. Befeucher nach Anspruch 1, **dadurch gekennzeichnet, dass** die Flussfeldstege (17) eine poröse Struktur aufweisen.

4. Befeuchter nach einem der Ansprüche 1 bis 3, **dadurch gekennzeichnet, dass** das Flussfeld in einem wärmeisolierenden Rahmen (18) angeordnet ist.

5. Befeuchter nach einem der Ansprüche 1 bis 4, **dadurch gekennzeichnet, dass** auf der dem Flussfeld gegenüberliegenden Seite der Membran ein zweites, gleichartig gebildetes Flussfeld zur Durchleitung des zu befeuchtenden Gases angeordnet ist.

6. Brennstoffzellenvorrichtung (1) mit einem Befeuchter nach Anspruch 5, **dadurch gekennzeichnet, dass** ein Kühlkreislauf (18) eines Brennstoffzellenstapels (3) durch die als Hohlstege gebildeten Flussfeldstege (17) des Befeuchters geführt ist, und dass die Strömungskanäle (16) mit einem Abscheider (9) des Brennstoffzellenstapels (3) strömungsverbunden sind.

7. Kraftfahrzeug mit einer Brennstoffzellenvorrichtung (1) nach Anspruch 6.

## Claims

1. A humidifier for a fuel cell device (1) with a water-vapor permeable membrane and at least one flow field arranged on one side of the membrane, in which flow channels (16) are separated by flow field webs (17), the flow field webs (17) being designed as hollow webs for integration into a coolant circuit (18), **characterized in that** the hollow webs are designed in cross section as a polygon and have a water reservoir (22) on their outer side, the water reservoir (22) being formed by a hygroscopic material.

2. The humidifier according to claim 1, **characterized in that** the flow field webs (17) are formed of a thermally conductive material.

3. The humidifier according to claim 1, **characterized in that** the flow field webs (17) have a porous structure.

4. The humidifier according to any one of claims 1 to 3, **characterized in that** the flow field is arranged in a heat-insulating frame (18).

5. The humidifier according to one of the claims 1 to 4, **characterized in that** a second, similarly formed flow field is arranged on the side of the membrane opposite the flow field for the passage of the gas to be humidified.

6. A fuel cell device (1) with a humidifier according to claim 5, **characterized in that** a coolant circuit (18) of a fuel cell stack (3) is guided through the flow field webs (17) of the humidifier formed as hollow webs, and **in that** the flow channels (16) are flow-connected to a separator (9) of the fuel cell stack (3).

7. A motor vehicle with a fuel cell device (1) according to claim 6.

## Revendications

1. Humidificateur pour un dispositif de pile à combustible (1) avec une membrane perméable à la vapeur d'eau et au moins un champ d'écoulement agencé sur un côté de la membrane, dans lequel des canaux d'écoulement (16) sont séparés par des nervures de champ d'écoulement (17), dans lequel les nervures de champ d'écoulement (17) sont conçues comme des nervures creuses pour l'intégration dans un circuit de fluide de refroidissement (18), **caractérisé en ce que** les nervures creuses sont réalisées en section transversale comme un polygone et présentent sur leur côté extérieur un réservoir d'eau (22), dans lequel le réservoir d'eau (22) est formé par un matériau hygroscopique.

2. Humidificateur selon la revendication 1, **caractérisé en ce que** les nervures de champ d'écoulement (17) sont formées avec un matériau conducteur de chaleur.

3. Humidificateur selon la revendication 1, **caractérisé en ce que** les nervures de champ d'écoulement (17) présentent une structure poreuse.

4. Humidificateur selon l'une quelconque des revendications 1 à 3, **caractérisé en ce que** le champ de flux est agencé dans un cadre thermiquement isolant (18).

5. Humidificateur selon l'une quelconque des revendications 1 à 4, **caractérisé en ce que**, sur le côté de la membrane opposé au champ d'écoulement, est agencé un second champ d'écoulement formé de manière similaire pour le passage du gaz à humidifier.

6. Dispositif de pile à combustible (1) avec un humidificateur selon la revendication 5, **caractérisé en ce qu'**un circuit de refroidissement (18) d'un empilement de piles à combustible (3) est guidé à travers les nervures de champ d'écoulement (17) de l'humidificateur formées comme des nervures creuses, et **en ce que** les canaux d'écoulement (16) sont reliés en écoulement à un séparateur (9) de l'empilement de piles à combustible (3).

7. Véhicule automobile avec un dispositif de pile à combustible (1) selon la revendication 6.
